# EUROPEAN PATENT APPLICATION

(11) **EP 3 051 436 A1**
(43) Date of publication of application: **03.08.2016**
(21) Application number: 14848134.4
(22) Date of filing: 18.06.2014
(51) Int. Cl.: G06F 17/30, H04L 29/08, H04L 12/24

(54) **ALARM FILTERING METHOD AND DEVICE IN NETWORK ELEMENT MANAGEMENT SYSTEM**

(30) Priority: 25.09.2013 CN 201310442724
(71) Applicant: ZTE Corporation, Shenzhen, Guangdong 518057 (CN)
(72) Inventor: ZHANG, Ying, Shenzhen Guangdong 518057 (CN)
(74) Representative: Tischner, Oliver
(86) International application number: PCT/CN2014/080213
(87) International publication number: WO 2015/043248

(57) **Abstract**

A method and device for filtering an alarm in an Element Management System (EMS) are provided. A text search box and an alarm list are set on a display interface, a client acquires a character sequence input by a user in the text search box, the character sequence is split and parsed, alarm data cached locally is filtered according to a parsing result, and the filtered alarm data is displayed in the alarm list in real time.

## Description

### TECHNICAL FIELD

The disclosure relates to an element management technology, and in particular to a method and device for filtering an alarm in an Element Management System (EMS).

### BACKGROUND

With the rapid development of a communication technology, more and more various network element devices in a communication network emerge. For this, an EMS is needed to manage these devices, collect fault information of these devices, and present the fault information on a unified alarm management interface.

An alarm management interface of a general EMS is an alarm data list interface. The EMS puts collected alarm data on the devices in the list interface to be checked by a user. However, with the scale enlargement of a communication network, the number of current alarms in the whole alarm system has been increased, several thousands of alarms are maximally contained previously, and more than one hundred thousand alarms to hundreds of thousands of alarms are easily required to be contained at present. Under this situation, a user urgently needs a filtering method to quickly search massive alarms for needed data.

Filtering operations of the general EMS refer to that the user opens a condition setting window by clicking query condition settings and then inputs an element position, an alarm code, an alarm level, an alarm text and other information in the condition setting window, and then a system puts alarm data meeting filtering conditions into the list interface to be checked by the user. However, the operation settings of such system are complicated, and requirements for the user are relatively high. In addition, due to the fact that a conventional network environment is complicated and multiple devices coexist, different devices may use different alarm attribute fields to express similar information. For example, in order to express a correlation of a certain alarm to a "high-tech zone", some devices will save this information in an "affected element" attribute field of the alarm when reporting the alarm, other devices may save this information in a "service object" attribute field of the alarm when reporting the alarm, and some other devices may use other self-defined attribute fields. Under this situation, it is very troublesome to set query conditions to filter all alarms containing similar information using a traditional method.

### SUMMARY

In view of this, the embodiments of the disclosure are intended to provide a method and device for filtering an alarm in an EMS, which at least can acquire a query character sequence input by a user in a text search box located in a same display interface as an alarm list, and can filter the alarm in alarm data cached locally.

The technical solutions of the embodiments of the disclosure are implemented as follows.

An embodiment of the disclosure provides a method for filtering an alarm in an EMS, which may include that:
a text search box and an alarm list are set on a display interface, a client acquires a character sequence input by a user in the text search box, the character sequence is split and parsed, alarm data cached locally is filtered according to a parsing result, and the filtered alarm data is displayed in the alarm list in real time.

In the above-mentioned solution, the splitting may refer to splitting the input character sequence into at least one key word according to a splitting rule, and the splitting rule may include: splitting the character sequence into the key word using a space and/or a splitting symbol.

In the above-mentioned solution, the parsing may refer to parsing the key word according to a parsing rule, and the parsing rule may include:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as a basic key word.

In the above-mentioned solution, the semantic word may include: a semantic word representative of a specific alarm attribute, and/or a semantic word representative of a "NO" relationship, and/or a semantic word representative of a global "OR" relationship, and/or a semantic word representative of a service action.

In the above-mentioned solution, the step that the alarm data cached locally is filtered according to the parsing result may include that:
the alarm data is filtered using the basic key word in an "AND" relationship, or, the alarm data is filtered according to the acquired semantic word.

An embodiment of the disclosure provides a device for filtering an alarm in an EMS, which may include: a display interface, an alarm data caching unit, a splitting and parsing unit and a filtering unit, wherein
the display interface is configured to receive a character sequence input by a user and display filtered alarm data;
the alarm data caching unit is configured to cache the alarm data;
the splitting and parsing unit is configured to split and parse the input character sequence;and
the filtering unit is configured to filter the alarm data in the alarm data caching unit according to a parsing result from the splitting and parsing unit, and send the filtered alarm data to a display unit in real time to display the filtered alarm data.

In the above-mentioned solution, the splitting and parsing unit may be further configured to split the input character sequence into at least one key word according to a splitting rule, and the splitting rule may include: splitting the character sequence into the key word using a space and/or a splitting symbol.

In the above-mentioned solution, the splitting and parsing unit may be further configured to parse the key word according to a parsing rule, and the parsing rule may include:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as a basic key word.

In the above-mentioned solution, the semantic word may include: a semantic word representative of a specific alarm attribute, and/or a semantic word representative of a "NO" relationship, and/or a semantic word representative of a global "OR" relationship, and/or a semantic word representative of a service action.

In the above-mentioned solution, the filtering unit may be further configured to filter, in accordance with the parsing result obtained by the splitting and parsing unit, the alarm data in the alarm data caching unit using the basic key word in an "AND" relationship, or, filter the alarm data according to the acquired semantic word.

The alarm data caching unit, the splitting and parsing unit and the filtering unit can be implemented by a Central Processing Unit (CPU), a Digital Signal Processor (DSP) or a Field-Programmable Gate Array (FPGA) during processing.

The embodiments of the disclosure provide the method and device for filtering an alarm in the EMS. A text search box and an alarm list are set on a display interface, a client acquires a character sequence input by a user in the text search box, the character sequence is split and parsed, the alarm data cached locally is filtered according to a parsing result, and the filtered alarm data is displayed in the alarm list in real time. Thus, the query character sequence input by the user can be acquired in the text search box located in the same display interface as the alarm list, and the alarm is filtered in the alarm data cached locally, thereby improving the filtering efficiency and greatly improving the user experience; and a filtering result can be continuously corrected by changing the character sequence, thereby being more flexible and convenient. Under the condition that the network environment is complicated, multiple devices coexist and different devices report similar alarm information using different alarm attribute fields, compared with a conventional query condition setting method in which a user needs to designate query attribute fields, the disclosure has the advantages that as long as the user inputs a key word, the system can filter all alarm data containing the key word.

### BRIEF DESCRIPTION OF THE DRAWINGS

Fig. 1 is a flow diagram of a method for filtering an alarm in an EMS according to the disclosure;
Fig. 2 is a diagram of a display interface in an EMS according to the disclosure;
Fig. 3 is a structural diagram of a device for filtering an alarm in an EMS according to the disclosure; and
Fig. 4 is a structural diagram of another device for filtering an alarm in an EMS according to the disclosure.

### DETAILED DESCRIPTION

In the embodiments of the disclosure, a text search box and an alarm list are set on a display interface, a client acquires a character sequence input by a user in the text search box, the character sequence is split and parsed, alarm data cached locally is filtered according to a parsing result, and the filtered alarm data is displayed in the alarm list in real time.

The disclosure is further described below in detail with reference to the drawings and the specific embodiments.

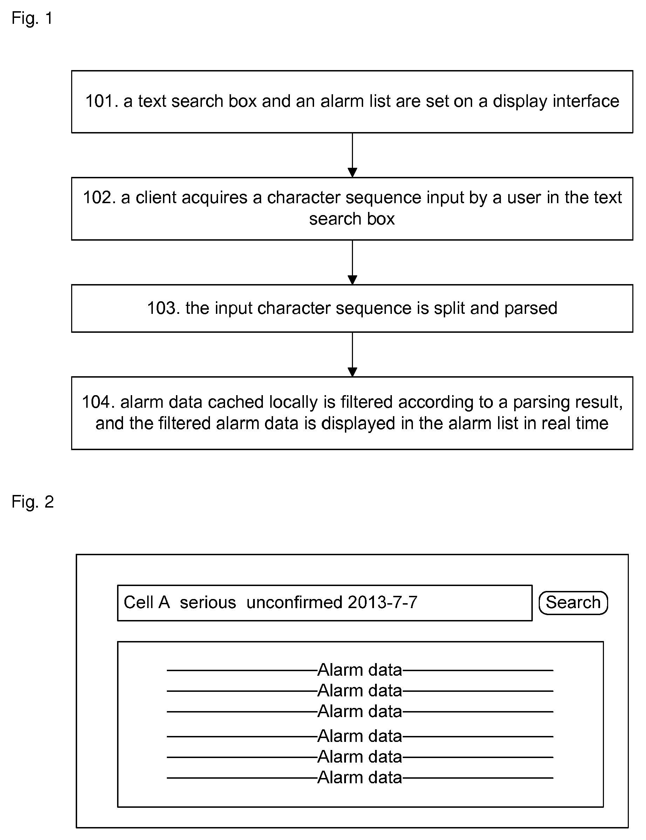

According to the disclosure, a method for filtering an alarm in an EMS is provided. As shown in Fig. 1, the method includes the steps as follows.

Step 101: A text search box and an alarm list are set on a display interface.

For example, in terms of Visual C++, a method for setting the text box includes creating a CEdit control on the display interface, and a method for setting the alarm list includes creating a ListBox control on the display interface.

Fig. 2 shows a diagram of a display interface in an EMS according to the disclosure. As shown in Fig. 2, the search box is located above the display interface, and the alarm list is located below the display interface.

Step 102: A client acquires a character sequence input by a user in the text search box.

As shown in Fig. 2, a search button is disposed at the right side of the text search box. After the user clicks the search button, the client acquires user inputs. The display interface may not be provided with a search button, and the client acquires user inputs in real time.

Step 103: The input character sequence is split and parsed.

Specifically, the input character sequence is split into at least one key word according to a splitting rule, and the key word is parsed according to a parsing rule,
wherein, the splitting rule includes: splitting the character sequence into the key word using a space and/or a splitting symbol; and
the splitting symbols are front and back double quotation marks "".

When the input character sequence does not contain splitting symbols, for example, if an input character sequence is "high-tech zone serious unconfirmed", then the character sequence is split into key words "high-tech zone", "serious" and "unconfirmed" according to the splitting rule; and
when the input character sequence contains splitting symbols, a sub-character sequence between the splitting symbols serves as a key word, and remaining parts are split using the spaces. For example, if an input character sequence includes "2013-07-10" cell a" serious", then the character sequence is split into key words "2013-07-10", "cell a" and "serious" according to the splitting rule.

In addition, when a symbol ahead of the splitting symbols is an escape symbol, it is meant that the splitting symbols are used for filtering, namely the splitting symbols do not have a splitting function; and
the escape symbol is \.

For example, an input character sequence "\\ \" \# \ "" is split into key words "\\", "\"", "\#" and "\ "" according to the splitting rule.

To be clear, the input character sequences involved in the disclosure are all contained in a pair of full width double quotation marks, the pair of full width double quotation marks is not needed in actual input, the key words instanced in the disclosure are distinguished by a pair of full width double quotation marks, and actual key words do not have the pair of full width double quotation marks.

Here, the parsing rule includes:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as the basic key word.
The basic key word is a key word which does not contain an escape symbol or a semantic symbol after splitting;
the semantic symbol is #;
the semantic word includes:
   a semantic word representative of a specific alarm attribute, for example, "#svr:" representing an alarm level, "#pos:" representing an alarm position, and "#txt:" representing an additional alarm text and the like;
   a semantic word representative of a "NO" relationship, for example, "#!:", which is collocated with a key word representative of the specific alarm attribute;
   a semantic word representative of a global "OR" relationship, for example, "#global:or", which independently occurs and represents that key words obtained by splitting and parsing a group of inputs have an "OR" relationship; and
   a semantic word representative of a service action, for example, "#mml:", which represents that the system needs to execute a service action once in addition to query and filtration, the class of the action being decided by a specific mml command.

For example, the input character sequence "\\ \" \#\"" is split into key words "\\", "\"", "\#" and "\ "" according to the splitting rule, and is parsed to acquire basic key words "\", """, "#" and """ according to the escape symbol having the escape function;
for example, an input character sequence "#svr:regular|serious #pos:high-tech zone #txt:link breakage" is split into key words "#svr:regular|serious", "#pos:high-tech zone" and "#txt:link breakage" according to the splitting rule, and is parsed into semantic words representative of specific alarm attributes according to the semantic symbol, namely a semantic word representative of an alarm level (#svr:), a semantic word representative of an alarm position (#pos:) and a semantic word representative of an additional alarm text (#txt:); and
for example, the input character sequence "high-tech zone serious unconfirmed" is split into key words "high-tech zone", "serious" and "unconfirmed" according to the splitting rule, the key words do not contain any escape symbol or semantic symbol, and "high-tech zone", "serious" and "unconfirmed" are basic key words.

Step 104: Alarm data cached locally is filtered according to a parsing result, and the filtered alarm data is displayed in the alarm list in real time.

Specifically, the alarm data is filtered using the basic key words having an "AND" relationship, or, the alarm data is filtered according to the semantic words parsed out, and the alarm data meeting a filtering condition is displayed in the alarm list on the display interface;
wherein, the step that the alarm data is filtered according to the acquired basic key words having the "AND" relationship specifically includes that: if a set of all attributes of an alarm contains all the basic key words parsed out, then the alarm meets the filtering condition;
for example, if the basic key words "high-tech zone", "serious" and "unconfirmed" are parsed out, then the filtering condition is that: a set of all attributes of an alarm contains the three key words "high-tech zone", "serious" and "unconfirmed";
wherein, the step that the alarm data is filtered according to the semantic words parsed out specifically includes that the alarm data is filtered according to the alarm attribute, the "NO" relationship and the global "OR" relationship represented by the semantic words, and the alarm data is filtered according to the "AND" relationship except relationships represented by the semantic words.

For example, the input character sequence "#svr:regular|serious #pos:high-tech zone #txt:link breakage" is split into key words "#svr:regular|serious", "#pos:high-tech zone" and "#txt:link breakage" according to the splitting rule, and is parsed into a semantic word representative of an alarm level (#svr:), a semantic word representative of an alarm position (#pos:) and a semantic word representative of an additional alarm text (#txt:) according to the parsing rule. The filtering condition is that: an alarm level attribute of an alarm contains key words "regular" or "serious", an alarm position attribute contains a key word "high-tech zone", and an additional alarm text attribute contains a key word "link breakage";
for example, an input character sequence "#!:#svr:regular|serious" is split into a key word "#!:#svr:regular|serious" according to the splitting rule, and is parsed into a semantic word representative of a "NO" relationship (#!:) and a semantic word representative of an alarm level (#svr:) according to the parsing rule. The filtering condition is that: an alarm level attribute of an alarm cannot contain key words "regular" or "serious"; and
for example, an input character sequence "#global:or high-tech zone serious" is split into key words "#global:or", "high-tech zone" and "serious" according to the splitting rule, and is parsed into a semantic word representative of a global "OR" relationship (#global:or) and basic semantic words "high-tech zone" and "serious" according to the parsing rule. The filtering condition is that: a set of all attributes of an alarm contains key words "high-tech zone" or "serious".

Here, filtering in the alarm data according to the filtering condition falls within the traditional art;
since there may be hundreds of thousands of alarm data or even more, it is necessary to take the filtering efficiency of alarms into consideration, and the filtering efficiency is improved in a mode of caching alarm data locally according to the disclosure;
wherein, the alarm data cached locally is alarm data which is acquired locally in real time and saved in an EMS stored in a remote memory, and the remote memory can be a server memory; and
the step further includes that: when the alarm data cached locally changes, the alarm data meeting the filtering condition can be updated and displayed in real time.

As described by the semantic word representative of the service action, the method further includes that: corresponding operations are executed according to the parsing result after the input character sequence is split and parsed;
specifically, the input character sequence is split into at least one key word according to the splitting rule, the at least one key word is parsed according to the parsing rule, the alarm data cached locally is filtered according to the parsing result, and the corresponding operations are executed after the alarm data is filtered;
for example, an input character sequence "#mml:export=c:\export.csv high-tech zone" is split into key words "#mml:export=c:\export.csv" and "high-tech zone" according to the splitting rule, and then the key words are parsed to acquire a semantic word representative of a service action (#mml) and a basic semantic word "high-tech zone" according to the parsing rule. The filtering condition is that: a set of all attributes of an alarm contains a key word "high-tech zone"; and in addition, after filtering, an alarm table export action is executed, and exported alarm data is saved in a file c:\export.csv in a csv format; and
for example, an input character sequence "#mml:print high-tech zone" is split into key words "#mml:print" and "high-tech zone" according to the splitting rule, and is parsed into a semantic word representative of a service action (#mml) and a basic semantic word "high-tech zone" according to the parsing rule. The filtering condition is that: a set of all attributes of an alarm contains a key word "high-tech zone"; and in addition, after filtering, an alarm table printing action is executed.

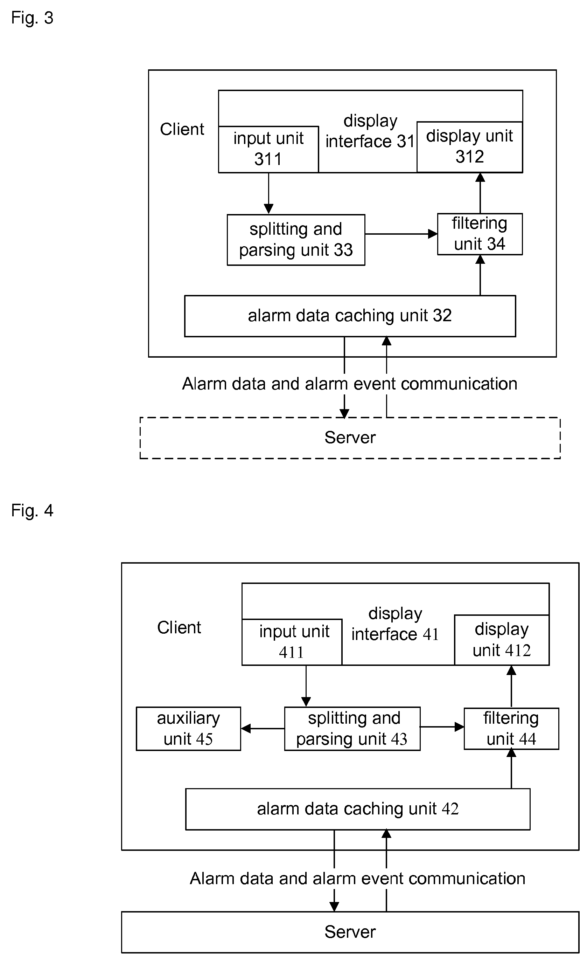

In order to achieve the method, the disclosure also provides a device for filtering an alarm in an EMS. As shown in Fig. 3, the device is located in a client, and includes: a display interface 31, an alarm data caching unit 32, a splitting and parsing unit 33 and a filtering unit 34, wherein
the display interface 31 is configured to receive a character sequence input by a user and display filtered alarm data;
the alarm data caching unit 32 is configured to cache the alarm data;
the splitting and parsing unit 33 is configured to split and parse the character sequence input by an input unit 311;
the filtering unit 34 is configured to filter the alarm data in the alarm data caching unit 32 according to a parsing result from the splitting and parsing unit 33, and send the filtered alarm data to a display unit 312 in real time to be displayed;
the input unit 311 is a text search box, specifically configured to receive an input of an alarm query character sequence of the user;
the display unit 312 is an alarm list, specifically configured to display the alarm data filtered by the filtering unit 34;
the alarm data caching unit 32 is specifically configured to locally acquire and save the alarm data in an EMS stored in a remote memory in real time;
wherein, the remote memory may be a server memory;
the splitting and parsing unit 33 is specifically configured to split the input character sequence into at least one key word according to a splitting rule, and parse the at least one key word according to a parsing rule,
wherein, the splitting rule includes: splitting the character sequence into the key word using a space and/or a splitting symbol; and
the splitting symbols are front and back double quotation marks "".

When the input character sequence does not contain splitting symbols, for example, if an input character sequence is "high-tech zone serious unconfirmed", then it is split into key words "high-tech zone", "serious" and "unconfirmed" according to the splitting rule; and
when an input character sequence contains splitting symbols, a sub-character sequence between the splitting symbols serves as a key word, and remaining parts are split using spaces. For example, if an input character sequence is "2013-07-10" cell a" serious", then it is split into key words "2013-07-10", "cell a" and "serious" according to the splitting rule.

In addition, when a symbol ahead of the splitting symbols is an escape symbol, it is meant that the splitting symbols are used for filtering, namely the splitting symbols do not have a splitting function; and
the escape symbol is \.

For example, an input character sequence "\\ \" \# \ "" is split into key words "\\", "\"", "\#" and "\ "" according to the splitting rule.

To be clear, the input character sequences involved in the disclosure are all contained in a pair of full width double quotation marks, the pair of full width double quotation marks is not needed in actual input, the key words instanced in the disclosure are distinguished by a pair of full width double quotation marks, and actual key words do not have the pair of full width double quotation marks.

Here, the parsing rule includes:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as a basic key word.
The basic key word is a key word which does not contain an escape symbol or a semantic symbol after being split;
the semantic symbol is #;
the semantic word includes:
   a semantic word representative of a specific alarm attribute, for example, "#svr:" representing an alarm level, "#pos:" representing an alarm position, and "#txt:" representing an additional alarm text and the like;
   a semantic word representative of a "NO" relationship, for example, "#!:", which is collocated with a key word representative of the specific alarm attribute;
   a semantic word representative of a global "OR" relationship, for example, "#global:or", which independently exists and represents that key words obtained by splitting and parsing of a group of inputs have an "OR" relationship; and
   a semantic word representative of a service action, for example, "#mml:", which represents that the system needs to execute a service action once in addition to query and filtration, the class of the action being decided by a specific mml command.

For example, the input character sequence "\\ \" \#\"" is split into key words "\\", "\"", "\#" and "\ "" according to the splitting rule, and is parsed into basic key words "\", """, "#" and """ according to the escape symbol having the escape function;
for example, an input character sequence "#svr:regular|serious #pos:high-tech zone #txt:link breakage" is split into key words "#svr:regular|serious", "#pos:high-tech zone" and "#txt:link breakage" according to the splitting rule, and is parsed into semantic words representative of specific alarm attributes according to the semantic symbol, namely a semantic word representative of an alarm level (#svr:), a semantic word representative of an alarm position (#pos:) and a semantic word representative of an additional alarm text (#txt:); and
for example, the input character sequence "high-tech zone serious unconfirmed" is split into key words "high-tech zone", "serious" and "unconfirmed" according to the splitting rule, the key words do not contain an escape symbol or a semantic symbol, and "high-tech zone", "serious" and "unconfirmed" are basic key words.

The filtering unit 34 is specifically configured to filter the alarm data according to the basic key words in an "AND" relationship acquired by the splitting and parsing unit 33, or, filter the alarm data according to the semantic words parsed out, and send the alarm data meeting a filtering condition to the display unit 312 to display the alarm data;
wherein, the step that the alarm data is filtered according to the acquired basic key words in an "AND" relationship specifically includes that: if a set of all attributes of an alarm contains all the acquired basic key words, then the alarm meets the filtering condition;
for example, if the basic key words "high-tech zone", "serious" and "unconfirmed" are parsed out, then the filtering condition is that: a set of all attributes of an alarm contains the three key words "high-tech zone", "serious" and "unconfirmed";
wherein, the step that the alarm data is filtered according to the acquired semantic words specifically includes that the alarm data is filtered according to the alarm attribute, the "NO" relationship and the global "OR" relationship represented by the semantic words, and the alarm data is filtered according to the "AND" relationship except relationships represented by the semantic words.

For example, the input character sequence "#svr:regular|serious #pos:high-tech zone #txt:link breakage" is split into key words "#svr:regular|serious", "#pos:high-tech zone" and "#txt:link breakage" according to the splitting rule, and is parsed into a semantic word representative of an alarm level (#svr:), a semantic word representative of an alarm position (#pos:) and a semantic word representative of an additional alarm text (#txt:) according to the parsing rule. The filtering condition is that: an alarm level attribute of an alarm contains key words "common" or "serious", an alarm position attribute contains a key word "high-tech zone", and an additional alarm text attribute contains a key word "link breakage";
for example, an input character sequence "#!:#svr:regular|serious" is split into a key word "#!:#svr:regular|serious" according to the splitting rule, and is parsed into a semantic word representative of a "NO" relationship (#!:) and a semantic word representative of an alarm level (#svr:) according to the parsing rule. The filtering condition is that: an alarm level attribute of an alarm cannot contain key words "regular" or "serious";
for example, an input character sequence "#global:or high-tech zone serious" is split into key words "#global:or", "high-tech zone" and "serious" according to the splitting rule, and is parsed into a semantic word representative of a global "OR" relationship (#global:or) and basic semantic words "high-tech zone" and "serious" according to the parsing rule. The filtering condition is that: a set of all attributes of an alarm contains key words "high-tech zone" or "serious".

The filtering unit 34 is further specifically configured to, when the alarm data in the alarm data caching unit 32 changes, filter the alarm data meeting the filtering condition in real time and send the filtered alarm data to the display unit 312 for displaying.

Here, filtering in the alarm data according to the filtering condition falls within the traditional art.

As described by the semantic word representative of the service action, contained in the semantic words, the service action can be executed according to the parsing result after the alarm data is filtered according to the parsing result. Thus, the disclosure also provides a structure of another device for filtering an alarm in an EMS. As shown in Fig. 4, the device is located in a client, and includes a display interface 41, an alarm data caching unit 42, a splitting and parsing unit 43, a filtering unit 44 and an auxiliary unit 45, wherein
the display interface 41, the alarm data caching unit 42, the splitting and parsing unit 43 and the filtering unit 44 have the same functions as all corresponding units in the device shown in Fig. 3; and
the auxiliary unit 45 is specifically configured to execute corresponding operations according to a parsing result from the splitting and parsing unit 43, after the alarm data caching unit 42 filters alarm data.

For example, an input character sequence "#mml:export=c:\export.csv high-tech zone" is split into key words "#mml:export=c:\export.csv" and "high-tech zone" according to a splitting rule, and is parsed into a semantic word representative of a service action (#mml) and a basic semantic word "high-tech zone" according to a parsing rule. A filtering condition is that: a set of all attributes of an alarm contains a key word "high-tech zone"; and in addition, an alarm table export action is executed after filtering is performed, and exported alarm data is saved in a file c:\export.csv in a csv format; and
for example, an input character sequence "#mml:print high-tech zone" is split into key words "#mml:print" and "high-tech zone" according to the splitting rule, and is parsed into a semantic word representative of a service action (#mml) and a basic semantic word "high-tech zone" according to the parsing rule. The filtering condition is that: a set of all attributes of an alarm contains a key word "high-tech zone"; and in addition, an alarm table printing action is executed after filtering is performed.

The display interface 41 may be a display;
the alarm data caching unit 42 may be a memory; and
the splitting and parsing unit 43, the filtering unit 44 and the auxiliary unit 45 may be implemented by a Central Processing Unit (CPU) in the device for filtering an alarm.

The above is only preferred embodiments of the disclosure, and is not intended to limit the protection scope of the disclosure.

### INDUSTRIAL APPLICABILITY

The disclosure provides the method and device for filtering an alarm in an EMS. A text search box and an alarm list are set on a display interface, a client acquires a character sequence input by a user in the text search box, the character sequence is split and parsed, the alarm data cached locally is filtered according to a parsing result, and the filtered alarm data is displayed in the alarm list in real time. Thus, the query character sequence input by the user can be acquired in the text search box located in the same display interface as the alarm list, and the alarm is filtered in the alarm data cached locally, thereby improving the filtering efficiency and greatly improving the user experience; and a filtering result can be continuously corrected by changing the character sequence, thereby being more flexible and convenient. Under the condition that the network environment is complicated, multiple devices coexist and different devices report similar alarm information using different alarm attribute fields, compared with a conventional query condition setting method in which a user needs to designate query attribute fields, the disclosure has the advantages that as long as the user inputs a key word, the system can filter all alarm data containing the key word.

## Claims

1. A method for filtering an alarm in an Element Management System (EMS), comprising:
setting a text search box and an alarm list on a display interface;
acquiring, by a client, a character sequence input by a user in the text search box, splitting and parsing the character sequence, filtering alarm data cached locally according to a parsing result, and displaying the filtered alarm data in the alarm list in real time.

2. The method according to claim 1, wherein the splitting refers to splitting the input character sequence into at least one key word according to a splitting rule, and the splitting rule comprises: splitting the character sequence into the key word using a space and/or a splitting symbol.

3. The method according to claim 1, wherein the parsing refers to parsing a key word obtained by splitting the character sequence according to a parsing rule, and the parsing rule comprises:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as a basic key word.

4. The method according to claim 3, wherein the semantic word comprises:
a semantic word representative of a specific alarm attribute, and/or a semantic word representative of a "NO" relationship, and/or a semantic word representative of a global "OR" relationship, and/or a semantic word representative of a service action.

5. The method according to claim 3 or 4, wherein filtering the alarm data cached locally according to the parsing result comprises:
filtering the alarm data using the acquired basic key word in an "AND" relationship, or,
filtering the alarm data according to the acquired semantic word.

6. A device for filtering an alarm in an Element Management System (EMS), comprising a display interface, an alarm data caching unit, a splitting and parsing unit and a filtering unit, wherein
the display interface is configured to receive a character sequence input by a user and display filtered alarm data;
the alarm data caching unit is configured to cache the alarm data;
the splitting and parsing unit is configured to split and parse the input character sequence;and
the filtering unit is configured to filter the alarm data in the alarm data caching unit according to a parsing result from the splitting and parsing unit, and send the filtered alarm data to a display unit in real time to display the filtered alarm data.

7. The device according to claim 6, wherein the splitting and parsing unit is further configured to split the input character sequence into at least one key word according to a splitting rule, and the splitting rule comprises: splitting the character sequence into the key word using a space and/or a splitting symbol.

8. The device according to claim 6, wherein the splitting and parsing unit is further configured to parse the key word according to a parsing rule, and the parsing rule comprises:
when the key word contains an escape symbol, parsing the key word to acquire a basic key word according to the escape symbol having an escape function;
when the key word starts from a semantic symbol, parsing the key word to acquire a semantic word according to the semantic symbol; and
when the key word does not contain an escape symbol or a semantic symbol, directly taking the key word as a basic key word.

9. The device according to claim 8, wherein the semantic word comprises:
a semantic word representative of a specific alarm attribute, and/or a semantic word representative of a "NO" relationship, and/or a semantic word representative of a global "OR" relationship, and/or a semantic word representative of a service action.

10. The device according to claim 8 or 9, wherein the filtering unit is further configured to filter, in accordance with the parsing result obtained by the splitting and parsing unit, the alarm data in the alarm data caching unit using the basic key word in an "AND" relationship, or, filter the alarm data according to the acquired parsed semantic word.
